# FASCICULE DE BREVET EUROPEEN

(11) **EP 3 915 160 B1**
(45) Date de publication et mention de la délivrance du brevet: **03.01.2024**
(21) Numéro de dépôt: 20705432.1
(22) Date de dépôt: 22.01.2020
(51) Int. Cl.: B60L 50/60, B60L 50/64, H01M 50/516, H01M 50/517, H01M 50/522, H01M 50/529

(54) **DISPOSITIF DE STOCKAGE D'ENERGIE ELECTRIQUE POUR VEHICULE AUTOMOBILE**
VORRICHTUNG EINES ENERGIESPEICHERS FÜR EIN MOBILES FAHRZEUG
ENERGY STORAGE DEVICE FOR AUTOMOTIVE VEHICLE

(30) Priorité: 22.01.2019 FR 1900522
(43) Date de publication de la demande: 01.12.2021
(73) Titulaire: VALEO SYSTEMES THERMIQUES, 78320 Le Mesnil Saint-Denis (FR)
(72) Inventeur: RIPA, Jerome, 78322 LE MESNIL SAINT DENIS CEDEX (FR); HENON, Emmanuel, 78322 LE MESNIL SAINT DENIS CEDEX (FR); DA COSTA PITO, Sergio, 78322 LE MESNIL SAITN DENIS CEDEX (FR); ANDRE, Stephan, 78322 LE MESNIL SAINT DENIS CEDEX (FR)
(74) Mandataire: Valeo Systèmes Thermiques
(86) Numéro de dépôt international: PCT/FR2020/050088
(87) Numéro de publication internationale: WO 2020/152422

(56) Documents cités:
- EP-A1- 2 048 725
- DE-A1- 19 847 190
- DE-A1-102012 221 751
- DE-A1-102013 220 044
- DE-A1-102015 217 644

## Description

L'invention concerne un dispositif de stockage d'énergie électrique pour véhicule automobile, comprenant un boîtier et au moins une cellule de stockage d'énergie électrique reçue dans le boîtier. L'invention se rapporte également à un compartiment pour dispositif de stockage d'énergie électrique pour véhicule automobile.

Dans le domaine automobile, il est connu de mettre en oeuvre des batteries électriques sous forme de modules. Chaque module comporte une pluralité de cellules de stockages d'énergie électrique reçues dans un boîtier. Il est ainsi plus aisé de combiner les batteries électriques pour obtenir une capacité de charge souhaitée. Il est également plus aisé, de la sorte, de monter la batterie sur le véhicule automobile, les cellules de stockage étant protégées par le boîtier.

La demande US 2011/0206967 A décrit un exemple de telle batterie. Dans cette demande, les cellules sont stockées dans des containers ayant des logements de réception des cellules. Une paroi des containers, destinées à être en contact avec une paroi d'un container voisin, présente des renfoncements formant une partie de conduit de circulation d'un fluide de refroidissement.

La demande DE 10 2013 220044 A1 divulgue un compartiment pour batteries de véhicule électrique comprenant un couvercle dans lequel se trouve un circuit intégré. Le couvercle est constitué d'un système multicouche où le circuit intégré se trouve protégé entre deux couches isolantes.

Dans un tel ensemble de stockage électrique, il est nécessaire de prévoir des connexions électriques entre les différentes bornes des cellules de batterie. Il est aussi nécessaire de prévoir des connexions de ces cellules avec l'extérieur de cet ensemble, par exemple vers un système de branchement pour la recharge des cellules de batterie.

La présente invention vise à améliorer ces connexions électriques.

À cet effet l'invention a pour objet un compartiment pour dispositif de stockage d'énergie électrique pour véhicule automobile, ce compartiment étant agencé pour recevoir au moins une cellule de stockage d'énergie électrique, notamment une pluralité de cellules, ce compartiment étant réalisé au moins partiellement en matériau composite, notamment ce matériau composite étant formée par une structure multicouches comprenant par exemple des feuilles de fibres de verre ou de carbone imprégnées notamment de résine thermoplastique, ce compartiment comprenant un boitier et un couvercle agencé pour fermer le boitier, ce compartiment comprenant au moins une piste électrique agencée pour être mise en contact électrique avec au moins l'une des cellules, lorsque le couvercle est monté sur le boitier, caractérisé en ce que la piste électrique est insérée au moins sur une partie de sa longueur dans une gaine électriquement isolante, la piste électrique étant portée par le couvercle.

L'invention préconise ainsi d'intégrer dans le couvercle du compartiment à batterie des pistes de puissance. Ceci est avantageux car il peut être évité d'avoir des câbles électriques qui peuvent être difficiles à manipuler. L'invention permet de faire les connexions électriques en manipulant seulement le couvercle.

Selon l'un des aspects de l'invention, la piste est une piste électrique de puissance, agencée pour convenir à un courant électrique allant de 48 Volts pour les modèles de voiture hybride et jusqu'à 1000 Volts pour les voitures électriques avec un ampérage pouvant atteindre les 450 Ampères dans le cas de la recharge rapide.

Selon l'un des aspects de l'invention, la piste électrique est insérée au moins sur une partie de sa longueur dans une gaine électriquement isolante, cette gaine étant par exemple à base de matière plastique.

Selon l'un des aspects de l'invention, la piste électrique est portée par le couvercle du fait d'un surmoulage de cette gaine dans la matière du couvercle, ce surmoulage assurant le maintien de la piste sur le couvercle via cette gaine.

Selon l'un des aspects de l'invention, la piste est réalisée en cuivre, aluminium ou un mélange des deux et présente par exemple une section rectangulaire.

Selon l'un des aspects de l'invention, la piste comporte une extrémité libre de la gaine, et servant à la connexion électrique avec un élément de connexion.

Selon un aspect de l'invention, la piste est agencée pour relier électriquement deux cellules de batterie entre elles, ou pour relier l'une des cellules à une source électrique extérieure au compartiment, notamment l'une des extrémités de piste étant agencée pour être soudée ou sertie ou posée mécaniquement sur une borne de connexion électrique de l'une des cellules de batterie.

Selon un aspect de l'invention, il est prévu au moins deux pistes conductrices, l'une pour relier deux cellules de batterie entre elles et l'autre piste pour relier au moins une des cellules de batterie à une source électrique extérieure au compartiment cette source étant par exemple un dispositif de recharge de batterie, ce ou ces pistes sont notamment sur une même face du couvercle, notamment la face intérieure.

Selon un aspect de l'invention, ces pistes sont parallèles entre elles sur au moins une partie de leur longueur. En variante, ces pistes sont non parallèles et présentent entre elles un angle oblique ou des directions courbes différentes.

Selon un aspect de l'invention, l'une au moins des pistes comporte une portion qui traverse un orifice dans le couvercle de sorte à relier l'une de cellules à un élément de connexion extérieur au compartiment, cette portion de piste étant notamment perpendiculaire au plan du couvercle au voisinage de l'orifice, par exemple la gaine autour de la piste traverse aussi l'orifice du couvercle.

L'invention a pour objet un compartiment contenant des cellules de batterie avec des connexions électriques réalisées par des pistes de puissance solidaires d'un couvercle qui ferme le boitier.

D'autres caractéristiques et avantages de l'invention apparaitront plus clairement à la lecture de la description suivante, donnée à titre d'exemple illustratif et non limitatif, et des dessins annexés parmi lesquels :

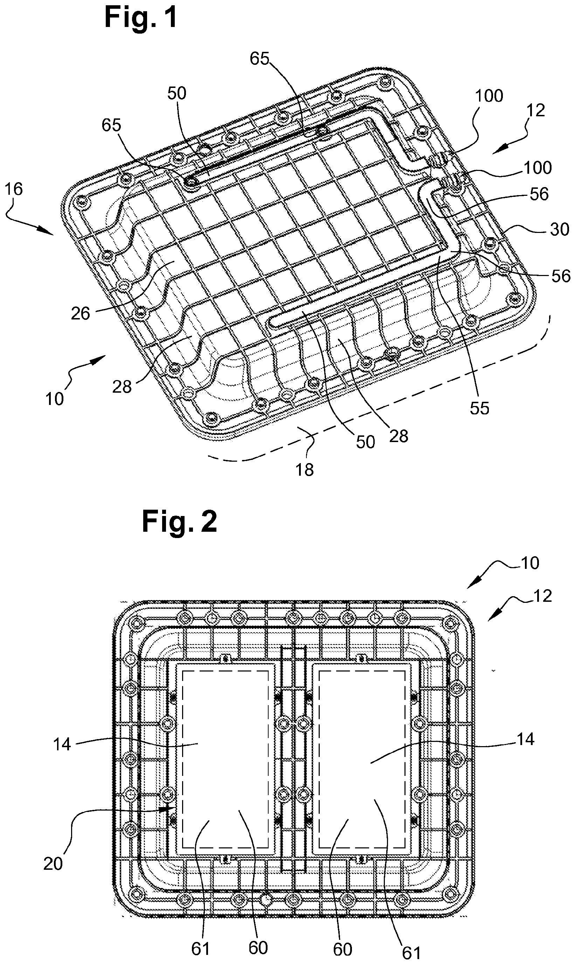

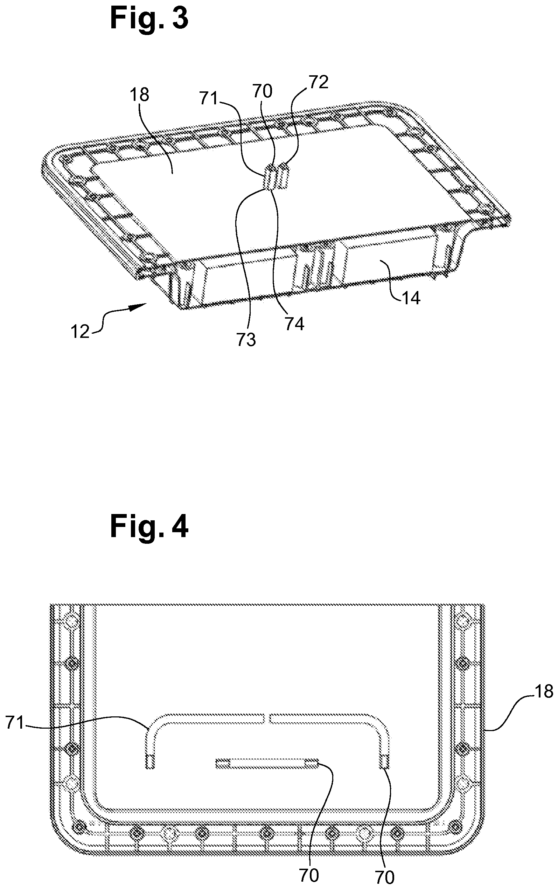

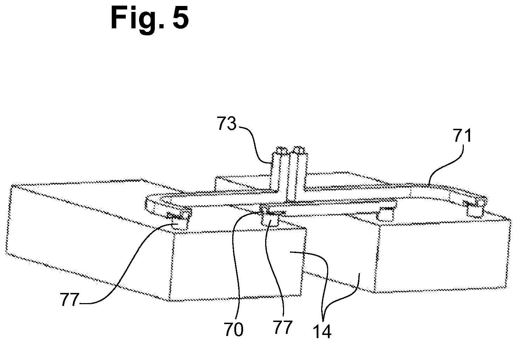

- les [Figure 1] à [Figure 5] montrent différentes vues d'une un exemple de réalisation de l'invention.

On a représenté sur les [Figure 1] et [Figure 2] un dispositif 10 de stockage d'énergie électrique pour véhicule automobile. Le véhicule automobile peut notamment être une voiture, un camion, un bus.

Le dispositif de stockage d'énergie électrique 10 comporte un boîtier 12 et des cellules 14 de stockage d'énergie électrique. Les cellules 14 sont par exemple montées électriquement en série. Le boîtier 12 forme un compartiment 16 avec une pièce rapportée 18 destinée à fermer le boîtier 12 pour protéger les cellules 14. La pièce rapportée 18 est ici un couvercle. Le boitier 12 a une forme de cuvette, avec une paroi fond 26, des parois latérales 28 et une collerette 30.

Le compartiment 16 qui est agencé pour recevoir les cellules de stockage d'énergie électrique, comporte ainsi la paroi de fond 26, la paroi de fond comportant un matériau composite, des parois latérales 28 se raccordant la paroi de fond 26, des canaux 50 pour une circulation d'un fluide de refroidissement, chaque canal 50 étant au moins partiellement formé par la paroi de fond 26, des éléments de connexion fluidique 100 agencés pour permettre de relier les canaux 50 avec un circuit externe de fluide de refroidissement non représenté, chaque élément de connexion 100 étant au moins partiellement surmoulé avec la paroi de fond ou la paroi latérale. Chaque élément de connexion fluidique 100 du type à connexion rapide, ou en anglais « Quick connect.

Le boitier 12 et le couvercle 18 sont par exemple réalisés chacun à partir d'une feuille en matériau composite, notamment comprenant des fibres de verre, éventuellement en variante des fibres de carbone ou d'une autre nature, pré-imprégnées d'une résine thermoplastique.

Le compartiment comporte un canal 50 de distribution de fluide de refroidissement, ou fluide réfrigérant, et un canal 50 de collecte de fluide de refroidissement, chaque canal communiquant avec un élément de connexion associé, tel que décrit ci-dessus, pour respectivement permettre l'alimentation du canal de distribution par le circuit externe et l'évacuation de fluide réfrigérant par le circuit externe. Chaque capot 55 est de forme longiligne et est sensiblement plan. Chaque capot 55 comporte, pour épouser un coude du canal, notamment deux coudes 56. L'une des extrémités du capot du canal 50 est en regard de l'élément de connexion 100. Il est prévu des échangeurs thermiques 60 sont notamment chacun une plaque 61 avec des canaux intérieurs pour la circulation de fluide de refroidissement, chaque échangeur étant agencé pour refroidir une ou des cellules de batterie.

Le liquide de refroidissement mis en oeuvre dans ce cas peut notamment être un réfrigérant liquide à base de dioxyde de carbone, comme du R744 par exemple, du 2, 3, 3, 3-tétrafluoropropène (ou HFO-1234yf) ou du 1, 1, 1, 2-tétrafluoroéthane (ou R-134a). Le liquide de refroidissement peut également être un nanofluide. Le liquide de refroidissement peut encore être de l'eau, incluant éventuellement des additifs.

Le couvercle 18 comprend des pistes électriques 70 portées par le couvercle 18, piste agencée pour être mise en contact électrique avec au moins l'une des cellules 14 lorsque le couvercle 18 est monté sur le boitier 12. La piste électrique de puissance 70 est insérée au moins sur une partie de sa longueur dans une gaine 71 électriquement isolante, cette gaine 71 étant par exemple à base de matière plastique. Chaque piste 70 est réalisée en cuivre, aluminium ou un mélange des deux et présente par exemple une section rectangulaire.

Chaque piste 70 comporte une extrémité libre de la gaine 71, et servant à la connexion électrique avec un élément de connexion.

Chaque piste70 est agencée pour relier électriquement deux cellules 14 de batterie entre elles, ou pour relier l'une des cellules à une source électrique extérieure au compartiment, notamment l'une des extrémités de piste étant agencée pour être soudée ou sertie ou posée mécaniquement sur une borne 77 de connexion électrique de l'une des cellules de batterie

Ces pistes 70 sont notamment sur une même face du couvercle, notamment la face intérieure. Certaines des pistes 70 sont parallèles entre elles sur au moins une partie de leur longueur.

Les pistes 70 comportent une portion 72 qui traverse un orifice 74 dans le couvercle de sorte à relier l'une de cellules à un élément de connexion extérieur au compartiment, cette portion de piste étant notamment perpendiculaire au plan du couvercle 18 au voisinage de l'orifice, par exemple la gaine 73 autour de la piste traverse aussi l'orifice du couvercle.

## Revendications

1. Compartiment pour dispositif (16) de stockage d'énergie électrique pour véhicule automobile, ce compartiment étant agencé pour recevoir au moins une cellule (14) de stockage d'énergie électrique, notamment une pluralité de cellules, ce compartiment étant réalisé au moins partiellement en matériau composite, ce compartiment comprenant un boitier (12) et un couvercle (18) agencé pour fermer le boitier, ce compartiment comprenant au moins une piste électrique (70) agencée pour être mise en contact électrique avec au moins l'une des cellules (14), lorsque le couvercle est monté sur le boitier, **caractérisé en ce que** la piste électrique (70) est insérée au moins sur une partie de sa longueur dans une gaine (71 ; 73) électriquement isolante, la piste électrique (70) étant portée par le couvercle (18).

2. Compartiment selon la revendication précédente, **caractérisé en ce que** la piste (70) est une piste électrique de puissance, agencée pour convenir à un courant électrique allant de 48 Volts pour les modèles de voiture hybride et jusqu'à 1000 Volts pour les voitures électriques avec un ampérage pouvant atteindre les 450 Ampères dans le cas de la recharge rapide.

3. Compartiment selon l'une des revendications précédentes, **caractérisé en ce que** la piste électrique est portée par le couvercle (18) du fait d'un surmoulage de cette gaine dans la matière du couvercle, ce surmoulage assurant le maintien de la piste sur le couvercle via cette gaine.

4. Compartiment selon l'une des revendications précédentes, **caractérisé en ce que** la piste (70) est réalisée en cuivre, aluminium ou un mélange des deux.

5. Compartiment selon l'une des revendications précédentes, **caractérisé en ce que** la piste comporte une extrémité libre de la gaine, et servant à la connexion électrique avec un élément de connexion.

6. Compartiment selon l'une des revendications précédentes, **caractérisé en ce que** la piste est agencée pour relier électriquement deux cellules de batterie entre elles, ou pour relier l'une des cellules à une source électrique extérieure au compartiment.

7. Compartiment selon l'une des revendications précédentes, **caractérisé en ce qu'**il est prévu au moins deux pistes conductrices, l'une pour relier deux cellules de batterie entre elles et l'autre piste pour relier au moins une des cellules de batterie à une source électrique extérieure au compartiment cette source étant par exemple un dispositif de recharge de batterie.

8. Compartiment selon l'une des revendications précédentes, **caractérisé en ce que** l'une au moins des pistes comporte une portion qui traverse un orifice dans le couvercle de sorte à relier l'une de cellules à un élément de connexion extérieur au compartiment.

## Patentansprüche

1. Behälter (16) für eine Vorrichtung zur Speicherung elektrischer Energie für ein Kraftfahrzeug, wobei dieser Behälter dafür ausgelegt ist, wenigstens eine Zelle (14) zur Speicherung elektrischer Energie aufzunehmen, insbesondere mehrere Zellen, wobei dieser Behälter wenigstens teilweise aus Verbundwerkstoff hergestellt ist, wobei dieser Behälter ein Gehäuse (12) und einen Deckel (18), der dafür ausgelegt ist, das Gehäuse zu verschließen, umfasst, wobei dieser Behälter wenigstens eine elektrische Leiterbahn (70) umfasst, die dafür ausgelegt ist, in elektrischen Kontakt mit wenigstens einer der Zellen (14) gebracht zu werden, wenn der Deckel auf dem Gehäuse angebracht wird, **dadurch gekennzeichnet, dass** die elektrische Leiterbahn (70) wenigstens auf einem Teil ihrer Länge in eine elektrisch isolierende Hülle (71; 73) eingesetzt ist, wobei die elektrische Leiterbahn (70) von dem Deckel (18) getragen wird.

2. Behälter nach dem vorhergehenden Anspruch, **dadurch gekennzeichnet, dass** die Leiterbahn (70) eine elektrische Leistungsleiterbahn ist, die so ausgelegt ist, dass sie für einen elektrischen Strom von 48 Volt für die Hybridautomodelle bis 1000 Volt für die Elektroautos mit einer Stromstärke, die im Fall der Schnellladung 450 Ampere erreichen kann, geeignet ist.

3. Behälter nach einem der vorhergehenden Ansprüche, **dadurch gekennzeichnet, dass** die elektrische Leiterbahn von dem Deckel (18) infolge einer Überformung dieser Hülle im Material des Deckels getragen wird, wobei diese Überformung den Halt der Leiterbahn am Deckel über diese Hülle sicherstellt.

4. Behälter nach einem der vorhergehenden Ansprüche, **dadurch gekennzeichnet, dass** die Leiterbahn (70) aus Kupfer, Aluminium oder einer Mischung von beidem hergestellt ist.

5. Behälter nach einem der vorhergehenden Ansprüche, **dadurch gekennzeichnet, dass** die Leiterbahn ein freies Ende der Hülle aufweist, das zur elektrischen Verbindung mit einem Verbindungselement dient.

6. Behälter nach einem der vorhergehenden Ansprüche, **dadurch gekennzeichnet, dass** die Leiterbahn dafür ausgelegt ist, zwei Batteriezellen elektrisch miteinander zu verbinden oder eine der Zellen mit einer Stromquelle außerhalb des Behälters zu verbinden.

7. Behälter nach einem der vorhergehenden Ansprüche, **dadurch gekennzeichnet, dass** wenigstens zwei Leiterbahnen vorgesehen sind, die eine, um zwei Batteriezellen miteinander zu verbinden, und die andere, um wenigstens eine der Batteriezellen mit einer Stromquelle außerhalb des Behälters zu verbinden, wobei diese Quelle zum Beispiel eine Batterieladevorrichtung ist.

8. Behälter nach einem der vorhergehenden Ansprüche, **dadurch gekennzeichnet, dass** wenigstens eine der Leiterbahnen einen Abschnitt aufweist, welcher eine Öffnung im Deckel durchquert, um so eine der Zellen mit einem Verbindungselement außerhalb des Behälters zu verbinden.

## Claims

1. Compartment for an electrical energy storage device (16) for a motor vehicle, this compartment being designed to accommodate at least one electrical energy storage cell (14), in particular a plurality of cells, this compartment being made at least partially of a composite material, this compartment comprising a casing (12) and a cover (18) designed to close the casing, this compartment comprising at least one electrical track (70) designed to be brought into electrical contact with at least one of the cells (14), when the cover is mounted on the casing, **characterized in that** the electrical track (70) is inserted, at least over part of its length, into an electrically insulating sheath (71; 73), the electrical track (70) being borne by the cover (18).

2. Compartment according to the preceding claim, **characterized in that** the track (70) is a power electrical track, designed to be suitable for an electric current ranging from 48 volts for hybrid car models and up to 1000 volts for electric cars with an amperage that may reach 450 amps in the case of fast charging.

3. Compartment according to one of the preceding claims, **characterized in that** the electrical track is borne by the cover (18) by way of an overmoulding of this sheath into the material of the cover, this overmoulding ensuring that the track is held on the cover via this sheath.

4. Compartment according to one of the preceding claims, **characterized in that** the track (70) is made of copper, aluminium or a mixture of the two.

5. Compartment according to one of the preceding claims, **characterized in that** the track comprises an end free of the sheath, serving to electrically connect to a connection element.

6. Compartment according to one of the preceding claims, **characterized in that** the track is designed to electrically connect two battery cells to one another, or to connect one of the cells to an electrical source external to the compartment.

7. Compartment according to one of the preceding claims, **characterized in that** at least two conductive tracks are provided, one for connecting two battery cells to one another and the other track for connecting at least one of the battery cells to an electrical source external to the compartment, this source being, for example, a battery-charging device.

8. Compartment according to one of the preceding claims, **characterized in that** at least one of the tracks comprises a portion that passes through an opening in the cover so as to connect one of the cells to a connection element external to the compartment.
